# EUROPÄISCHE PATENTSCHRIFT

(11) **EP 0 409 109 B1**
(45) Veröffentlichungstag und Bekanntmachung des Hinweises auf die Patenterteilung: **21.09.1994**
(21) Anmeldenummer: 90113493.2
(22) Anmeldetag: 13.07.1990
(51) Int. Cl.: H01R 31/08, H01R 13/703, H05K 7/14

(54) **Verteilereinrichtung für eine Telekommunikationsanlage**
Distribution device for a telecommunication installation
Dispositif de distribution pour une installation de télécommunication

(30) Priorität: 17.07.1989 DE 3923606
(43) Veröffentlichungstag der Anmeldung: 23.01.1991
(73) Patentinhaber: SIEMENS AKTIENGESELLSCHAFT, 80333 München (DE)
(72) Erfinder: Scholtholt, Hans, Dipl.-Ing. (FH), D-8044 Lohhof (DE); Steiner, Ewald, Dipl.-Ing. (FH), D-8137 Berg 3 (DE)

(56) Entgegenhaltungen:
- DE-A- 2 643 150
- FR-A- 2 583 929
- US-A- 4 283 100

## Beschreibung

Die Erfindung bezieht sich auf eine Verteilereinrichtung für eine Telekommunikations-, insbesondere Fernsprechanlage, wobei die Verteilereinrichtung scheibenartige, übereinandergestapelte Kontaktbauteile aufweist, die frontseitig mit jeweils einer Reihe von Anschlußelementen für ankommende und einer dazu benachbarten parallelen Reihe von paarweise gegenüberliegenden Anschlußelementen für abgehende Leitungen versehen sind. Eine derartige Verteilereinrichtung ist z. B. durch die DE-A-37 06 107 bekannt geworden. Danach sind die Anschlußelemente mit Kontaktfedern verbunden, die auf der Rückseite der Verteilereinrichtung Steckkontaktstellen für einen Schutzstecker bilden. Dieser ist z. B. mit Stromsicherungen versehen, deren beide Pole mit entsprechenden Gegenkontaktstellen verbunden sind. Damit sind die Kontaktfedern über den Schutzstecker miteinander verbunden. Der Schutzstecker ist von der Seite her in die Verteilereinrichtung einschiebbar. Um das Einschieben zu erleichtern, können die Kontaktfedern des Kontaktbauteils mittels einer Exzenterwelle von den Gegenkontaktstellen abgehoben werden. Dabei kommt es jedoch zu einer Unterbrechung aller Verbindungen.

Der Erfindung liegt die Aufgabe zugrunde, die elektrischen Verbindungen zwischen den Anschlußelementen der beiden Reihen auch beim Stecken und Ziehen des Schutzsteckers aufrechtzuerhalten.

Diese Aufgabe wird durch die Erfindung gemäß Anspruch 1 gelöst. Der Kurzschlußstecker ermöglich die Aufrechterhaltung der elektrischen Verbindungen während des Schutzsteckerwechsels, ohne daß dazu die Kontaktbauteile abgeändert werden müssen. Er stellt ein einfaches Bauteil dar, daß in einfacher und übersichtlicher Weise problemlos an die Anschlußelemente angeschaltet werden kann.

Vorteilhafte Weiterbildungen der Erfindung sind in den Ansprüchen 2 bis 5 gekennzeichnet:

Durch die Weiterbildung nach Anspruch 2 ist es möglich, den Kurzschlußstecker so schmal zu halten, daß gleichzeitig benachbarte Kontaktbauteile ungehindert kurzgeschlossen werden können. Es ist möglich, die Anschlußdrähte so tief in die Schneidklemmen einzudrücken, daß sie am Gehäuse des Kontaktbauteils anliegen. Damit wird genügend freie Länge zum Anschalten der Kurzschlußbügel geschaffen.

Durch die Weiterbildung nach Anspruch 3 kann der Kurzschlußstecker im Kontaktbauteil bereits genau geführt werden, bevor die Kurzschlußbügel auf die Anschlußelemente treffen. Dabei genügt es, wenn lediglich für einige der Stecköffnungen Führungszungen vorgesehen werden.

Durch die Weiterbildung nach Anspruch 4 werden die Kurzschlußbügel in einfacher Weise auf das mit den Zapfen versehene Gehäuseteil aufgesetzt. Für jeden Kurzschlußbügel ist ein Zapfen vorgesehen, der in eine entsprechende konisch verengte Bohrung des anderen Gehäuseteils hineingedrückt wird. Die Vielzahl der Zapfen ergibt eine hohe Haltekraft, die eine sichere Übertragung der Ziehkräfte ermöglicht.

Durch die Weiterbildung nach Anspruch 5 können die Kurzschlußbügel mit einer so großen Auflaufschräge versehen werden, daß unterschiedliche Anschlußelemente mit unterschiedlichen lichten Abständen mit ein und demselben Kurzschlußstecker kontaktiert werden können.

Im folgenden wird die Erfindung anhand eines in der Zeichnung dargestellten Ausführungsbeispieles näher erläutert.

Es zeigen
- Fig. 1: eine Draufsicht auf ein scheibenförmiges Kontaktbauteil eines Schichtverteilers mit einem frontseitigen Kurzschlußstecker und einem rückseitigen Schutzstecker vor dem Einsetzen der Stecker,
- Fig. 2: einen seitlichen Schnitt durch das Kontaktbauteil nach Figur 1 mit dem eingesteckten Kurzschlußstecker,
- Fig. 3: einen Schnitt durch den Kurzschlußstecker nach Figur 2.

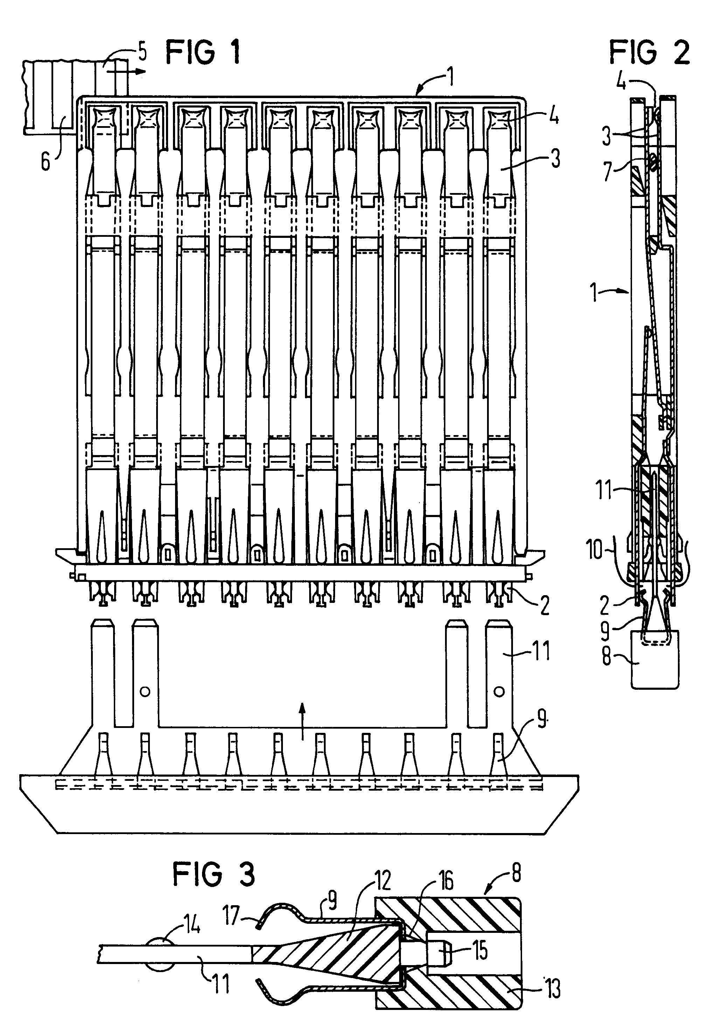

Nach den Figuren 1 und 2 ist ein Kontaktbauteil 1 eines Schichtverteilers scheibenförmig ausgebildet. Derartige Kontaktbauteile können in dem Schichtverteiler mit ihren flachen Seiten übereinandergestapelt werden. Dabei können zwischen den einzelnen Kontaktbauteilen noch scheibenförmige Drahtführungen angeordnet sein, die ein seitliches Einführen der anzuschließenden Schaltdrähte ermöglichen. Das Kontaktbauteil ist frontseitig mit zwei Reihen von als Schneidklemmen ausgebildeten Anschlußelementen 2 versehen. Diese liegen sich in den beiden parallelen Reihen paarweise gegenüber.

Auf der Rückseite des Kontaktbauteils sind Kontaktfedern 3 angeordnet, die Steckkontaktstellen 4 für einen in der angedeuteten Pfeilrichtung seitlich einschiebbaren Schutzstecker 5 mit entsprechenden Gegenkontaktstellen 6 aufweisen. Die Kontaktfedern sind mit den frontseitigen Anschlußelementen 2 elektrisch verbunden. Beim eingeschobenen Schutzstecker sind die Steckkontaktstellen mechanisch getrennt, aber über den z. B. mit Stromsicherungen bestückten Schutzstecker 5 elektrisch miteinander verbunden. Das Einstecken des Schutzsteckers kann z. B. mittels einer Exenterwelle 7 erleichtert werden, die ein Auseinanderspreizen der Kontaktfedern 3 ermöglicht. Während des Steckens und Ziehens des Schutzsteckers 5 wird die elektrische Verbindung zwischen den Kontaktstellen 4 kurzzeitig unterbrochen.

Um diese Unterbrechung unwirksam werden zu lassen, ist an das Kontaktbauteil 1 auf seiner Frontseite ein Schutzstecker 8 ansetzbar, der Kurzschlußbügel 9 aufweist, die mit den frontseitig abstehenden Anschlußelementen 2 mit angeschlossenen Schaltdrähten 10 federnd kontaktierbar sind. Der Kurzschlußstecker 8 ist mit Führungszungen 11 versehen, die in Stecköffnungen des Kontaktbauteils 1 einsteckbar sind. Diese Stecköffnungen dienen außerdem zum Einstecken von Prüf- oder Trennsteckern.

Die Kurzschlußbügel 9 sind im wesentlichen u-förmig gebogene Kontaktfedern, deren freie Enden auf den einander zugewandten Seiten an den Anschlußelementen 2 anliegen. Dadurch sind diese elektrisch unmittelbar miteinander verbunden, so daß auch beim Stecken und Ziehen des Schutzsteckers 5 die elektrische Verbindung zwischen den ankommenden und abgehenden Leitungen in Form der Schaltdrähte 10 nicht unterbrochen wird.

Nach Figur 3 besteht ein Gehäuse des Schutzsteckers 8 aus einem Rückteil 12 und einem Frontteil 13 zwischen denen die Kurzschlußbügel 9 fixiert sind. Die Führungszungen 11 sind an das Rückteil 12 angesetzt. Sie weisen ballige Erhebungen 14 auf, die in entsprechenden Vertiefungen des Kontaktbauteils 1 (Figur 2) verrasten. Dadurch kann der Kurzschlußstecker 8 sicher am Kontaktbauteil 1 gehalten werden.

Das Gehäuserückteil weist in Richtung des Frontteils ragende Zapfen 15 auf, die durch konisch verjüngte engere Bohrungen 16 des Frontteils 13 hindurchragen. Dabei werden die Zapfen 15 geringfügig eingeschnürt, so daß eine sichere Verbindung zustande kommt. Die Kurzschlußbügel 9 sind mit zu den Zapfen 15 passenden Bohrungen versehen und vor dem Zusammensetzen der Gehäuseteile über diese geschoben. Durch die Fügekraft werden sie zwischen den beiden Gehäuseteilen lagerichtig gehalten. Diese können mit zusätzlichen Zentriernasen für die Seitenschenkel der Kurzschlußbügel 9 versehen sein, so daß diese gegen Verdrehung gesichert sind.

Die Zapfen 15 durchragen die u-förmigen Kurzschlußbügel 9 in deren Basis. Von dort aus ist das Rückteil 12 zu den Führungszungen 11 hin geradlinig verjüngt, so daß ein relativ großer Federspielraum für die Seitenschenkel der Federbügel 9 geschaffen wird. Deren freie Enden sind mit entsprechend großen Auflaufschrägen 17 versehen, die große Abstandsunterschiede zwischen den Anschlußelementen 2 (Figur 2) ausgleichen können.

## Patentansprüche

1. Verteilereinrichtung für eine Telekommunikations-, insbesondere Fernsprechanlage, wobei die Verteilereinrichtung scheibenartige, übereinandergestapelte Kontaktbauteile (1) aufweist, die frontseitig mit jeweils einer Reihe von Anschlußelementen (2) für ankommende und einer dazu benachbarten, parallelen Reihe von paarweise gegen über liegenden Anschlußelementen (2) für abgehende Leitungen (z. B. 10) versehen sind, wobei die Anschlußelemente (2) mit Kontaktfedern (3) verbunden sind, die auf der Rückseite der Verteilereinrichtung Steckkontaktstellen (4) für einen Schutzstecker (5) bilden, der von der Seite her in die Verteilereinrichtung einschiebbar ist und der die Kontaktfedern (3) der einen Reihe mit denen der anderen Reihe elektrisch verbindet,
**dadurch** **gekennzeichnet**,
daß zwischen die frontseitig herausragenden Anschlußelemente (2) für die ankommenden und abgehenden Leitungen (z. B. 10) u-förmig gebogene federnde Kurzschlußbügel (9) eines Kurzschlußsteckers (8) einsetzbar sind, die sich mit den Anschlußelementen (2) verspannen und diese direkt miteinander verbinden.

2. Verteilereinrichtung nach Anspruch 1 ,
**dadurch** **gekennzeichnet**,
daß sich die Kurzschlußbügel (9) mit den als Schneidklemmen ausgebildeten Anschlußelementen (2) an deren einander zugewandten Seiten verspreizen und daß die Berührungsstellen außerhalb der Anschlußstellen für die ankommenden und abgehenden Leitungen (z.B. 10) liegen.

3. Verteilereinrichtung nach Anspruch 1 oder 2,
**dadurch** **gekennzeichnet**,
daß der Kurzschlußstecker (5) mit Führungszungen (11) versehen ist, die in Steckeröffnungen z. B. für Prüfstecker der Verteilereinrichtung einsteckbar sind.

4. Verteilereinrichtung nach Anspruch 1, 2 oder 3,
**dadurch** **gekennzeichnet**,
daß die Kurzschlußbügel (9) zwischen zwei Gehäuseteilen (12, 13) des Kurzschlußsteckers (5) gehalten sind, daß die beiden Gehäuseteile (12, 13) wechselseitig mit Zapfen (15) und Bohrungen (16) ineinander greifen und daß die Zapfen (15) durch passende Durchbrüche in der Basis der Kurzschlußbügel (9) hindurchragen.

5. Verteilereinrichtung nach einem der vorhergehenden Ansprüche,
**dadurch gekennzeichnet**,
daß die Enden der Kurzschlußbügel (9) zueinander hin abgebogen sind und daß das Gehäuse (12, 13) des Kurzschlußsteckers sich zu den Führungszungen (11) verjüngt.

## Claims

1. Distributing device for a telecommunication, particularly a telephone system, in which the distributing device exhibits disc-like contact components (1) which are stacked on top of one another and which are provided at the front with in each case one row of connecting elements (2) for incoming and an adjacent parallel row of connecting elements (2) for outgoing lines (for example 10), which are located opposite in pairs, the connecting elements (2) being connected to contact springs (3) which form at the rear of the distributing device plug-in contact points (4) for a protective plug (5) which can be inserted into the distributing device from the side and which electrically connects the contact springs (3) of one row to those of the other row, characterized in that between the connecting elements (2) protruding at the front for the incoming and outgoing lines (for example 10), elastic short-circuit clips (9), which are bent in the form of a U, of a short-circuit plug (8) can be inserted which become clamped to the connecting elements (2) and connect these directly to one another.

2. Distributing device according to Claim 1, characterized in that at their mutually facing sides the short-circuit clips (9) become spread with the connecting elements (2), constructed as insulation piercing connecting devices, and in that the contact points are outside the connecting points for the incoming and outgoing lines (for example 10).

3. Distributing device according to Claim 1 or 2, characterized in that the short-circuit plug (5) is provided with guide tongues (11) which can be inserted into plug-in openings, for example for test plugs of the distributing device.

4. Distributing device according to Claim 1, 2 or 3, characterized in that the short-circuit clips (9) are held between two housing parts (12, 13) of the short-circuit plug (5), in that the two housing parts (12, 13) alternately engage with pins (15) and holes (16) into each other and in that the pins (15) protrude through matching penetrations in the base of the short-circuit clips (9).

5. Distributing device according to one of the preceding claims, characterized in that the ends of the short-circuit clips (9) are bent away towards one another and in that the housing (12, 13) of the short-circuit plug tapers towards the guide tongues (11).

## Revendications

1. Dispositif répartiteur pour une installation de télécommunication, notamment une installation téléphonique, le dispositif répartiteur possédant des composants de contact (1) en forme de disques, empilés les uns sur les autres et qui comportent chacun frontalement une rangée d'éléments de raccordement (2) pour des lignes d'arrivée (par exemple 10) et comportent chacun une rangée parallèle, voisine de la précédente, d'éléments de raccordement (2), situés en vis-à-vis par couples, pour des lignes de départ (par exemple 10), et dans lequel les éléments de raccordement (2) sont reliés à des ressorts de contact (3), qui forment, sur la face arrière du dispositif répartiteur, des emplacements de contact à enfichage (4) pour un connecteur de protection (5), qui peut être enfiché latéralement dans le dispositif répartiteur et relie électriquement les ressorts de contact (3) d'une rangée à ceux de l'autre rangée, caractérisé par le fait qu'entre les éléments de raccordement (2), qui font saillie frontalement et sont prévus pour les lignes d'arrivée et de départ (par exemple 10) peuvent être insérés des étriers élastiques de court-circuit (9) d'un connecteur de court-circuit (8), qui sont repliés en forme de U, se bloquent contre les éléments (2) et relient ces derniers directement entre eux.

2. Dispositif répartiteur suivant la revendication 1, caractérisé par le fait que les étriers de court-circuit (9) équipés des éléments de raccordement (2) réalisés sous la forme de bornes à déplacement d'isolant, s'écartent au niveau de leurs faces qui sont tournées l'une vers l'autre et que les zones de contact sont situées à l'extérieur des emplacements de raccordement pour les lignes d'arrivée et de départ (par exemple 10).

3. Dispositif répartiteur suivant la revendication 1 ou 2, caractérisé par le fait que le connecteur de court-circuit (5) comporte des languettes de guidage (11), qui peuvent être enfichées dans des ouvertures d'enfichage par exemple pour des connecteurs de contrôle du dispositif répartiteur.

4. Dispositif répartiteur suivant la revendication 1, 2 ou 3, caractérisé par le fait que les étriers de court-circuit (9) sont maintenus entre deux éléments (12, 13) du boîtier du connecteur de court-circuit (5) et que les deux parties (12, 13) du boîtier s'engagent l'une dans l'autre alternativement au moyen de tétons (15) et de perçages (16), et que les tétons (15) traversent des passages adaptés ménagés dans la base des étriers de court-circuit (9).

5. Dispositif répartiteur suivant l'une des revendications précédentes, caractérisé par le fait que les extrémités des étriers de court-circuit (9) sont repliées l'une vers l'autre et que le boîtier (12, 13) du connecteur de court-circuit se rétrécit en direction des languettes de guidage (11).
